Europäisches Patentamt

European Patent Office

Office européen des brevets

(11) Veröffentlichungsnummer: **0 238 991 B1**

(12) **EUROPÄISCHE PATENTSCHRIFT**

(45) Veröffentlichungstag der Patentschrift: **02.05.91**

(21) Anmeldenummer: **87103940.0**

(22) Anmeldetag: **18.03.87**

(51) Int. Cl.⁵: **C08G 18/08**, C08L 75/04, D06M 15/37, D06M 15/564

(54) **Lösungsmittelhaltige, PU-Dispersionen enthaltende Beschichtungsmassen und deren Verwendung zur Herstellung von wasserdampfdurchlässigen Polyurethan-Beschichtungen.**

(30) Priorität: **26.03.86 DE 3610200**

(43) Veröffentlichungstag der Anmeldung:
**30.09.87 Patentblatt 87/40**

(45) Bekanntmachung des Hinweises auf die
Patenterteilung:
**02.05.91 Patentblatt 91/18**

(84) Benannte Vertragsstaaten:
**AT BE CH DE ES FR GB IT LI NL SE**

(56) Entgegenhaltungen:
**EP-A- 0 163 085**
**EP-A- 0 208 908**

(73) Patentinhaber: **BAYER AG**

**W-5090 Leverkusen 1 Bayerwerk(DE)**

(72) Erfinder: **Thoma, Wilhelm, Dr.**
**Birkenweg 25**
**W-5090 Leverkusen 3(DE)**
Erfinder: **Langel, Rolf, D. I.**
**Hüscheider Strasse 85**
**W-5090 Leverkusen 3(DE)**
Erfinder: **Schröer, Walter, Dr.**
**Nicolai-Hartmann-Strasse 29**
**W-5090 Leverkusen(DE)**

## Beschreibung

Die Erfindung betrifft PU-Dispersionen und Lösungsmittel enthaltende Beschichtungsmassen (Strichpasten) sowie deren Verwendung in einem vereinfachten Verfahren zur Herstellung von wasserdampfdurchlässigen, "mikroporösen" Beschichtungen auf Textil- oder Ledersubstraten im Direkt-oder Transferverfahren nach dem Prinzip der Verdampfungskoagulation unter Verwendung dieser wasserdispergierten Polyurethan-Kunststoffe enthaltenden, lösungsmittelhaltigen Streichpasten.

Textil- oder Lederbeschichtungen, die eine hohe Durchlässigkeit für Wasserdampf aufweisen und zugleich eine hohe Wasserdichtigkeit besitzen, sind, vor allem auf dem Bekleidungs-und Schuh-Sektor, von zunehmendem Interesse.

Der Vorteil solchermaßen beschichteter Materialien ist, daß die daraus hergestellte Bekleidung einerseits optimal schützt, andererseits aber die Körperfeuchtigkeit in Form von Wasserdampf entweichen läßt. Diese Eigenschaften haben sowohl in gesundheitlicher und hygienischer Hinsicht als auch im Hinblick auf den Tragekomfort einen hohen Stellenwert.

Ein wichtiges Verfahren, mikroporöse und somit wasserdampfdurchlässige Beschichtungen zu erzeugen, ist das der sogenannten Badkoagulation, wie es zum Beispiel in der DE-AS 1 270 276 und DE-AS 1 769 277 beschrieben ist. Dabei wird ein Substrat mit einem in einem organischen Lösungsmittel gelösten Polyurethan oder Polyurethanharnstoff beschichtet und das beschichtete Produkt in ein Bad aus einem mit dem Lösungsmittel mischbaren Nichtlösungsmittel (z.B. Wasser) geführt. Die Koagulation des Polyurethans erfolgt durch die Extraktion des Lösungsmittels durch den Nichtlöser.

Die Nachteile dieses Verfahrens bestehen darin, daß zur erforderlichen vollständigen Entfernung des Lösungsmittels sehr große Mengen Nichtlöser benötigt werden und daß das Verfahren viel Zeit in Anspruch nimmt. Außerdem sind zur Durchführung dieses Verfahrens wie auch zur Aufarbeitung der dabei anfallen-den Lösungsmittel-/Nichtlösungsmittelgemische spezielle, reativ aufwendige Apparaturen erforderlich.

Es hat daher nicht an Versuchen gefehlt, wasserdampfdurchlässige Beschichtungen nach Art einer einfachen Direkt-oder Transferbeschichtung auf konventionellen Textilbeschichtungsmaschinen herzustellen. Die meisten dieser Versuche beschreiten den Weg der sogenannten Verdampfungskoagulation. Dieses Verfahren wird im Prinzip so durchgeführt, daß einem, in einem flüchtigen Lösungsmittel gelÖsten Polymeren eine gewisse Menge eines weniger flüchtigen Nichtlösungsmittels beigemischt wird und die so entstandene Lösung, Dispersion oder Suspension auf ein Substrat gestrichen wird. Die Beschichtung wird durch schonendes Erhitzen getrocknet, wobei zunächst bevorzugt das flüchtige Lösungsmittel verdampft. Die Folge ist, daß das Polymere in der Schicht koaguliert und nach endgültiger Trocknung eine mikroporöse Struktur aufweist.

Diese Verfahrensweise ist z.B. in DE-PS 1 694 059 beschrieben; dabei werden Polyurethane eingesetzt, die in flüchtigen organischen Lösungsmitteln, wie z.B. Tetrahydrofuran oder Methylethylketon kolloidal gelöst sind und mit organischen Nichtlösungsmitteln höherer Verdunstungszahl, wie z.B. Waschbenzin, vermischt werden.

Eine ähnliche Verfahrensweise ist in der Schweizerischen Patentschrift 481 971 beschrieben, mit der Erweiterung, daß dort unter den, den Polymerlösungen zuzusetzenden Hichtlösungsmitteln auch Wasser genannt wird. Ein weiteres Beispiel dieser Art stellt das Verfahren gemäß DE-PS 2 004 276 dar. Hier werden hydrophile Polyurethane auf Basis aromatischer Diisocyanate eingesetzt, die bestimmte Anteile an Polyoxyethylenverbindungen als Aufbaukomponenten enthalten. Lösungen dieser Polyurethane in bestimmten organischen Lösungsmitteln, wie z.B. Methylethylketon, werden mit Wasser als Nichtlösungsmittel vermischt und auf ein Substrat aufgetragen, worauf die Beschichtung durch selektive Verdampfung koaguliert und anschließend getrocknet wird.

Die genannten, nach dem Prinzip der Verdampfungskoagulation arbeitenden Verfahren weisen jedoch noch schwerwiegende Mängel auf. Ein wesentlicher Nachteil besteht darin, daß die selektive Verdampfung der flüchtigeren Lösungsmittelanteile viel Zeit benötigt und einer äußerst genauen Temperaturführung bedarf. Die Handhabung der entsprechenden Produkte auf den Beschichtungsmaschinen ist daher kompliziert und vor allem nur mit langsamen Fahrgeschwindigkeiten möglich. Ein weiterer gravierender Nachteil, der insbesondere das erwähnte Verfahren gemäß DE-PS 2 004 276 betrifft, ist in der schwierigen Verabeitbarkeit der dort beschriebenen Polyurethan-Lösungen bzw. -Suspensionen begründet. Obwohl der Festkörpergehalt niedrig ist, sind diese Produkte, sogar schon vor der erst zum Zeitpunkt der Applikation stattfindenden Wasserzugabe, hochviskos. Sie werden als "schlammartige Suspensionen" beschrieben, neigen stark zu vorzeitiger Antrocknung mit Bildung von Gelteilchen und Stippen und sind daher vom Beschichter schlecht handzuhaben. Darüber hinaus haben die Beschichtungen gemäß letztgenannter Patentschrift den Nachteil mangelnder Lichtechtheit.

Aufgabe der vorliegenden Erfindung war es daher, ein Verfahren zur Herstellung von wasserdampfdurchlässigen Beschichtungen zur Verfügung zu stellen, das auf herkömmlichen Beschichtungsmaschinen im Direkt- oder Transferverfahren durchgeführt werden kann und das die oben im einzelnen geschilderten Nachteile nicht aufweist.

Diese Aufgabe konnte durch die Bereitstellung der nachstehend näher beschriebenen, erfindungsgemäßen, mehrphasigen, stabilen Streichpasten und ihre Verwendung im Beschichtungsverfahren nach dem Direkt- oder Transferverfahren nach dem Prinzip der Verdampfungskoagulation gelöst werden.

Es sind aus der DE-OS 3 415 920 bereits wäßrige Dispersionszusammensetzungen bekannt, welche auf Basis von PU-Dispersionen, carboxylgruppenhaltigen, wäßrigen Verdickerlösungen, selbstvernetzenden Polysiloxangemischen und Vernetzungsmitteln bestehen. Aus ihnen können hydrophobe, besonders dünne Beschichtungen, jedoch nicht mikroporöse Beschichtungen, hergestellt werden.

Der Erfindung liegt die überraschende Beobachtung zugrunde, daß aus an sich hydrophoben Polyurethan oder Polyurethanharnstoffen in wäßriger Dispersion im Gemisch mit unten näher definierten Nicht-Polyurethanharzen mit seiten- oder endständigen Carboxylatgruppen und selbstvernetzenden Polysiloxanen, wenn sie mit nicht mit Wasser mischbaren Lösemitteln, mit Siedepunkten unter 170° C, vorzugsweise unter 160° C, vermischt werden, stabile Streichpasten erhältlich sind, die sich in besonders einfacher und schneller Weise auf herkömmlichen Beschichtungsmaschinen zu mikroporösen Beschichtungen verarbeiten lassen. Vorzugsweise handelt es sich bei den erfindungsgemäßen Basispolymeren um Polyurethanharnstoff-Dispersionen auf Basis aliphatischer Polyisocyanate, wodurch vorteilhaft lichtechte wasserdampfdurchlässige Beschichtungen resultieren.

Das erfindungsgemäße Verfahren hat den Vorteil, daß die gebrauchsfertigen Streichpasten aus Polyurethanhandispersionen, carboxylgruppenhaltigen Nichtpolyurethanen, Vernetzern, selbstvernetzenden Polysiloxanen und mit Wasser nicht mischbaren organischen Lösemitteln gut handhabbar sind, z.B. Viskositäten von 5.000 bis 40.000 mPas/25° C, vorzugsweise 10.000 bis 30.000 mPas/25° C, aufweisen, gut lagerfähig sind und gut rakelbar sind. Durch Vernetzung wird die Hydrophilie der dispergierten Polyurethane und der verdickend wirkenden Nicht-Polyurethane herabgesetzt. Die Wasserdampfdurchlässigkeit der beschichteten Artikel ist größer als 4 mg/cm² /h.

Die Trocknungszeiten der auf die flächenhaften Träger gerakelten Streichpasten sind kurz, 1 bis 5 Minuten, damit sind die Produktionsgeschwindigkeiten groß. Im Gegensatz hierzu steht das in der OS 1 469 579 beschriebene Verfahren, das Trockenzeiten von mehreren Stunden erfordert.

Es wurden nun Streichpasten auf Basis vonwäßrigen PU-Dispersionen, polymeren Verdickern undselbstvernetzbaren Polysiloxansystemen gefunden, die dadurch gekennzeichnet sind, daß die Streichpasten lösungsmittelhaltige, mehrphasige, stabile Gemische sind aus

a) 20 bis 90 Gew.-% bevorzugt 40 bis 70 Gew.-% anwäßrigen Polyurethan-Dispersionen, 20 bis 60 gew.-%ig, bevorzugt 35 bis 45 gew.-%ig aus Polyurethan, enthaltend end- und/oder seitenständigen Carboxylatund/oder Sulfonat-Gruppen und/oder OxyethylenEinheiten enthaltende Polyetherketten,

b) 0,1 bis 5 Gew.-% wasserlöslichen, vernetzbaren, polymeren Nicht-Polyurethanen mit Carboxyl-Gruppen oder ihren Salzen, als Verdicker für PU-Dispersionen,

c) mindestens 3 Gew.%, vorzugsweise 10 bis 60 Gew`-%, insbesondere 25 bis 45 Gew.-% an mit Wasser nicht mischbaren organischen Lösemitteln mit Siedepunkten unter 170° C, als Hichtlöser für Polyurethane in wäßrigen Dispersionen,

d) 0,1 bis 5 Gew.-%, vorzugsweise 1 bis 3 Gew.-% an Vernetzern für die Polyurethane a) und/oder NichtPolyurethane b) mit reaktiven, vernetzbaren Gruppen in wäßrigen Dispersionen,

e) 0,1 bis 5 Gew.-%, vorzugsweise 1 bis 3 Gew.-% an selbstvernetzenden Polysiloxangemischen, welche Vinylgruppen tragende höhermolekulare Dimethylpolysiloxane, gegebenenfalls zusätzlich niedermolekulare cyclische Vinyl-methylsiloxane, SiH-Gruppen tragende Polydimethylsiloxane und einen Pt-Komplex als Katalysator enthalten,

f) 0 bis 5 Gew.-%, bevorzugt 0,1 bis 5 Gew.-%, insbesondere 1 bis 3 Gew.-% an Hydrophobierungsmitteln, Stabilisatoren, beispielsweise gegen Verfärbung und Abbau und/oder weiteren Beschichtungshilfsmitteln

(die Summe der Prozentanteile a) bis f) soll sich dabei jeweils zu 100 addieren).

Weiterer Erfindungsgegenstand ist die Verwendung der Streichpasten nach vorstehender Charakterisierung zur Herstellung von wasserdampfdurchläsigen Beschichtungen auf Textil- oder Ledersubstraten im Direkt- oder Transferverfahren nach dem Prinzip der Verdampfungskoagulation.

Die zur Durchführung des Verdampfungskoagulationsverfahrens eingesetzten Streichpasten werden vorzugsweise nach einem solchen Verfahren hergestellt, daß die Dispersionen der Polyurethane bzw. Polyurethanharnstoffe in Wasser durch Zusatz der wasserlöslichen, polymeren Nicht-Polyurethane bei pH 8 bis 9 verdickt werden und dann die mit Wasser nicht mischbaren organischen Lösemittel eingearbeitet werden; schließlich fügt man Vernetzer, Silicone und gegebenenfalls andere Beschichtungshilfsmittel hinzu.

3

EP 0 238 991 B1

Die PUR-Dispersionen a) werden in an sich bekannter Weise aus den üblichen Komponenten: höhermolekulare Polyhydroxylverbindungen, z.B. des Molekulargewichtsbereichs 400 bis 8.000, Polyisocyanaten, bevorzugt aliphatischen und cycloaliphatischen Diisocyanate, hydrophilierend wirkenden Substanzen wie überwiegend ethoxygruppenhaltigen mono-oder polyfunktionellen Polyethern und/oder ionische Gruppen aufweisenden Verbindungen und üblichen Kettenverlängerungsmitteln, z.B. Dialkoholen und/oder Aminoalkoholen und/oder Diaminen bzw. ihren Bisketiminen und/oder Hydrazinhydrat bzw. seinen Ketazinen hergestellt. Entsprechende Verfahren zu ihrer Herstellung und geeignete Ausgangskomponenten sind z.B. in den DE-AS 1 097 678,
DE-PS 1 184 946, DE-PS 1 178 586, (US-PS 3 756 912),
DE-OS 1 237 306, DE-OS 1 495 745, DE-OS 1 595 602,
DE-OS 1 770 068, DE-OS 1 913 271, DE-OS 2 019 324,
DE-OS 2 314 512 (US-PS 3 905 929), DE-OS 2 811 148,
DE-OS 2 320 719 (GB-PS 1 465 572), DE-OS 2 446 440,
DE-OS 2 555 534, DE-OS 2 725 589, De-OS 2 732 131 und
US-PS 4 192 937 und in entsprechenden Publikationen, z.B. D. Dieterich et al, Ang. Chem. 82 , 53 (1970), Angew. Makromol. Chem. 76 , 85 (1972) und 98 , 133-165 (1981) und Progress in Organic Coatings 9 , 281-340 (1981) bzw. den darin aufgeführten Literaturstellen beschrieben. Es können auch OH-haltige Dispersionen eingesetzt werden, wie sie in der EP-A 122 552 auf Seite 6 bis Seite 14 ausführlich beschrieben sind. Die dort genannten und auch in weiteren Veröffentlichungen zum Stand der Technik der PU-Dispersionsherstellung genannten Ausgangsmaterialien und Herstellungsverfahren können Verwendung finden.

Der zur Herstellung der Polyurethan-Disprsion verwendeten Ausgangskomponente sind z.B. höhermolekulare Polyole, wie zwei- und mehrwertige Hydroxy-Polyester, -Polylactone, -Polycarbonate, -Polyether und -Polyacetale oder ihre Mischkondensate bzw. Mischungen. Die Molekulargewichte liegen dabei zwischen 400 und 8.000, vorzugsweise zwischen 600 und 4.000.

Als Polyisocyanate sind die zwei- oder mehrwertigen aromatischen, heterocyclischen oder aliphatischen (inklusive cycloaliphatischen) Polyisocyanate, vorzugsweise Diisocyanate geeignet.

Zum Einbau von hydrophilen Zentren werden Polyoxyethylen-Mono-oder-Polyole als alleinige Zentren und/oder ionische Verbindungen eingesetzt. Die ionischen Verbindungen stellen zumeist anionische Gruppen (z.B. $SO_3$- oder Carboxylat-oder Phosphorsäuregruppen) enthaltende Polyole dar, z.B. Sulfonatdiole nach DE-OS 2 410 862 oder sulfonatgruppenhaltige Polyamine (z.B. mit Ethylen-, Propylen- oder Butansulfon modifizierte Diamine) dar. Auch kationische Gruppen, z.B. Salze von tert. Aminen sind geeignete Hydrophile, ionische Zentren.

Die PUR-Dispersionen sind auf Basis von aliphatischen, cycloaliphatischen und aromatischen Polyisocyanaten, bevorzugt solchen auf aliphatischen und/oder cycloaliphatischen Polyisocyanaten aufgebaut.

Streichpasten, dadurch gekennzeichnet, daß die Polyurethane der wäßrigen Dispersionen a) aus
1,0 Mol Polyhydroxyverbindung vom Molgewicht 600 bis 5.000,
1,2 bis 5,0 Mol aliphatischen und/oder cycloaliphatischen und/oder aromatischen Polyisocyanaten,
0,1 bis 4,0 Mol Polyalkoholen und/oder Polyaminen vom Molgewicht 62 bis 500 als Kettenverlängerer, wobei 0,01 bis 4,0 Mol dieser Kettenverlängerer mindestens eine Carboxylat- und/oder Sulfonatgruppe und/oder eine Oxyethylen-Einheiten enthaltende Polyetherkette tragen,
bestehen, sind besonders bevorzugt.

Wasserlösliche, polymere Nicht-Polyurethane nach b) mit vernetzbaren reaktiven Gruppen, vorzugsweise Carboxylgruppen oder ihren Salzen, als Verdicker für die Polyurethan-Dispersionen sind z.B. Carboxylgruppen-haltige Polymere in wäßrigen Lösungen. Die wäßrigen Lösungen sind 2 bis 25 %ig. Genannt seien z.B. Poly(meth)acrylsäuren; Carboxymethylcellulosen, vor allem deren Alkali- und Ammoniumsalze einschließlich organischer Aminsalze, z.B. mit Triethylamin oder Triethanolamin oder N-Methylmorpholin. 0,1 bis 5,0 Gew.-%, bevorzugt 1 bis 3 Gew.-%, der wäßrigen Verdickerlösungen werden eingesetzt.

Als b) sind bevorzugt Alkali- und/oder Ammoniumslaze und/oder organische Aminsalze von Polyacryl-/Methacrylsäuren und/oder Cellulosecarbonsäuren.

Als mit Wasser nicht mischbare Lösemittel nach c) mit Siedepunkten <170° C, bevorzugt <160° C, dienen aliphatische und/oder aromatischen Kohlenwasserstoffe, z.B. Benzinfraktionen, Gemische aus aromatischen Kohlenwasserstoffen von $C_9$-$C_{11}$-Produkten (Solvesso® 100, Esso), ferner Toluol, Xylol, Mesitylen, Durol, Ethylbenzol u.a. und deren Gemische; niedere Fettsäureester, z.B. Ethylacetate, Butylacetate, Amylacetate, Ethoxyglykolacetate, Methoxypropylacetate, Ethylpropionate, Butylbutyrate und deren Gemische bzw. Gemische mit den genannten Kohlenwasserstoffen; aliphatische und cycloaliphatische Ketone, z.B. Methylisobutylketon, Ethylbutylketon, Dibutylketon, Cyclohexanon und deren Gemische bzw. Gemische mit den genannten Kohlenwasserstoffen und/oder Estern.

4

Als Vernetzer d) für die in den Streichpasten enthaltenen Polyurethane a) und insbesondere für die als Verdicker eingesetzten carboxylgruppenhaltigen, wasserlöslichen Polymere b) dienen beispielsweise Harnstoff- und Melamin-Formaldehydharze, Polyaziridine, Polyepoxide, Polyisocyanat(abspalter) und/oder Polycarbodiimide.

Beispielhaft seien genannt: Mit Methanol oder Butanolen ganz oder teilweise, vorzugsweise überwiegend veretherte Harnstoff- und Melamin-methylolharze, wie sie beispielsweise als Melamin-hexamethylolether, oder als formulierte Handelsprodukte der Hoechst-AG unter der Bezeichnung Maprenal® MF 900, 910, 915, 920, 927, 800, 650, 700 und 750 oder als Cassurit® HML erhältlich sind; mit Ethylenimin oder Propylenimin umgesetzte Polyisocyanate, sog.

Aziridinharnstoffe (Bayer, DE-PS 1 153 161); Umsetzungsprodukte von Acrylsäureestern mehrwertiger Alkohole und Ethylenimin und/oder Propylenimin, z.B. Rekationsprodukte aus Trimethylolpropantriacrylat mit Propylenimin; Polyepoxide aus Dian und Epichlorhydrin oder Polyalkohole und Epichlorhydrin, Polycarbodiimide aus z.B. Toluylendiisocyanat oder mit Butanonoxim oder Malonester blockierte Polyisocyanate wie sie in DE-OS 3 313 236, Beispiel 4 beschrieben sind.

Die Vernetzer werden in Mengen von 0,1 bis 5 Gew.-%, bevorzugt 1 bis 3 Gew.-%, bezogen auf das Streichpastengewicht, verwendet.

Derartige additionsvernetzende Siliconmischungen werden beispielsweise in der DE-OS 1 668 159 und der US-PS 3 159 601 beschrieben.

Als Komponenten eignen sich insbesondere

W) vinylgruppenhaltige Polydimethylsiloxane mit einem Molekulargewicht von etwa 10.000 bis 25.000, vorzugsweise mit einem Vinylgruppengehalt von 0,2 bis 10 Gew.-% und vorzugsweise endständigen Vinylgruppen,

X) Si-H-gruppenhaltige Polymethylsiloxane mit Molekulargewichten von etwa 1.000 bis 20.000, vorzugsweise mit einem SiH-Gehalt von 0,1 bis 8 Gew.-%, z.B. Trimethyl-siloxy-methyl-hydrogen-dimethylpolysiloxan, mit Molekulargewichten von 1.000 bis 10.000,

Y) gegebenenfalls eine niedermolekulare, cyclische, vinylgruppenhaltige Methylsiloxanverbindung, z.B. cyclisches Methylvinyl-tetrasiloxan und

Z) Platinkatalysatoren, insbesondere Platin-Siloxankomplexe, wie sie durch Umsetzung von Platinverbindungen wie Platinhalogeniden mit Vinylsiloxanverbindungen, vorzugsweise vom Typ X oder W entstehen, und insbesondere in Lösung des Platinkomplexes in W) oder X) eingesetzt werden.

Die Mengen von W:X:Y:Z verhalten sich dabei beispielsweise wie (80-95):(5-15):(0,1-0,5):(0,01-0,2).

Die Streichpasten können nach f) übliche Pigmente, Füllstoffe, Hydrophobierungsmittel, Licht- und Hydrolysestabilisatoren, Antioxydantien, Flammschutzmittel, Antistatika, Verlaufhilfen, Entschäumer, Griffmittel, fungizide und bakterizide Mittel und ähnliche, an sich bekannte Additive enthalten.

Beispiele

Beispiel 1

I. Herstellung der PUR-Dispersion P 1

1.700 g (1,0 Mol) eines Mischpolyesters aus Hexandiol-1,6/Neopentylglykol (65/35 Mol-%) und Adipinsäure werden mit 303 g (1,8 Mol) Hexan-1,6-diisocyanat zu einem NCO-Prepolymeren umgesetzt, dieses wird in wäßrig-acetonischer Phase mit 152 g (0,8 Mol) ethylendiaminethylsulfonsäurem Na als Kettenverlängerer zum Polyesterurethanharnstoff umgesetzt. Unter Abdestillieren des Acetons wird unter weiterem Wasserzusatz die Feststoffkonzentration der Dispersion auf 40 % eingestellt.

II. Herstellung der Grundstrichpaste

1.000 g PUR-Dispersion P 1 nach 1/I werden mit 8 g einer 25 %igen Polyacrylsäurelösung versetzt; nach Zugabe von 2 g conc. Ammoniak und 3 g Triethanolamin zeigt die nunmehr verdickte Dispersion einen pH-Wert von 9. Nach Zugabe von 1 g Entschäumer (Antispumin DJ, Firma Stockhausen, Düsseldorf) werden 600 g Waschbenzin unter gutem Rühren eingearbeitet, Feststoffgehalt der Streichpaste ca. 25 %.

In 1.000 g dieser PUR-Benzin-Dispersion (PUR-B/1) werden 12,5 g eines Polyisocyanatabspalters, NCO-Gehalt ca. 10 %, (beschrieben in DE-P 3 313 236.4, Beispiel 4) eingerührt, Feststoffgehalt der Streichpaste ca. 25,5 %, Viskosität ca. 10.000 mPas/25 °C.

III. Herstellung der Deckstrichpaste

In 1.000 g der viskosen PUR-Benzin-Dispersion (PUR-B/1) werden 6 g eines Polyepoxids (aus Dian und Epichlorhydrin, Viskosität ca. 150 mPas/25 °C, Epoxidäquivalent 120) und 6 g eines selbstvernetzenden Silicon-Gemisches, wie es in DE-P 3 415 920.7, Beispiel 1, beschrieben wird, eingerührt. Die Streichpaste hat einen Feststoffgehalt von ca. 26,5 % und eine Viskosität von ca. 8.000 mPas/25 °C.

IV. Herstellung eines wasserdampfdurchlässigen beschichteten Artikels

Polyamidgewebe von ca. 100 g/m² Warengewicht wird mit der Grundstrichpaste 1/II per Luftrakel beschichtet. Die Fahrbedingungen sind:

| | |
|---|---|
| Trockentemperatur: | 70° C / 80° C / 100° C |
| Luftführung: | gedrosselt |
| Geschwindigkeit: | 6 m/Min. |
| Feststoffauflage: | 5 g/m² |

Am 2. Streichwerk wird mit der Deckstrichpaste 1/III über Walzenrakel der Deckstrich aufgebracht:

| | |
|---|---|
| Trockentemperatur: | 70° C / 70° C / 100° C |
| Luftführung: | gedrosselt |
| Rakelspalt: | 0,12 mm |
| Feststoffauflage: | 20 g/m² |

Der Artikel zeichnet sich durch sehr weichen Griff, hohe Wasserdichte und hohe Wasserdampfdurchlässigkeit aus.

**Wassersäule**

| | |
|---|---|
| a) Original | 1.050 mm |
| b) 3 x 30° C-Wäsche | 600 mm |
| c) 1 x Chemischreinigung | 700 mm |

**Wasserdampfduchlässigkeit**
(nach IUP 15)      5 mg/cm² h

Scrubb-Text, 1.000 Hübe, naß ohne Beschädigung (o.B.).

Beispiel 2

I. Herstellung der Grundstrichpaste

In 1.000 g der PUR-Benzin-Dispersion PUR-B/1 gemäß 1/II werden 9 g des in 1/III beschriebenen Polyepoxids eingearbeitet, Feststoffgehalt der Streichpaste ca. 25,5 %, Viskosität ca. 10.000 mPas/25°C.

## II. Herstellung der Deckstrichpaste

800 g PUR-Dispersion P 1 nach 1/I und 200 g PUR-Dispersion gemäß DE 3 134 161, Beispiel 2 werden gemischt und mit 10 g einer 25 %igen Polyacrylsäurelösung versetzt. Nach Zugabe von 2 g conc. Ammoniak und 3 g Triethanolamin zeigt die dadurch verdickte Dispersion einen pH-Wert von 9.

Nach Zugabe von 1 g Entschäumer (Antispumin® DJ) werden 600 g Waschbenzin dispergiert. Feststoffgehalt ca. 25 %.

In 1.000 g dieser viskosen PUR-Benzin-Dispersion (PUR-B/2) werden 3 g des in 1/III beschriebenen Polyepoxids, 5 g einer 50 %igen wäßrigen Lösung eines Melaminharzes und 10 g eines selbstvernetzenden Silicongemisches, beschrieben in P 3 415 920.7, Beispiel 1, eingerührt. Die Streichpaste hat einen Feststoffgehalt von ca. 26 % und eine Viskosität von ca. 9.000 mPas/25°C.

## III. Herstellung eines wasserdampfdurchlässig beschichteten Artikels

Analog zu 1/IV wird ein Polyestergewebe von ca. 110 g/m² Warengewicht mit 2/I grundiert und mit 2/II beschichtet. Die gesamte Feststoffauflage beträgt ca. 25 g/m². Der wasserdichte, wasserdampfdurchlässige Artikel ist sehr weich und eignet sich besonders zur Herstellung von sportlicher Oberbekleidung. Zur Erhöhung der Wasserdichtigkeit wird der Artikel mit einem Schlußstrich, Feststoffauflage 5 g/m², per Luftrakel versehen.

Die Schlußstrichpaste besteht aus 400 g PUR-Dispersion nach 1/I und 600 g PUR-Dispersion nach DE 3 134 161, Beispiel 2.

Das Dispersionsgemisch wird nach Verdünnung mit 200 g Wasser mittels 20 g einer 25 %igen Polyacrylsäurelösung versetzt und mit conc. Ammoniak auf pH 9 eingestellt. Die 33 %ige Streichpaste hat eine Viskosität von ca. 4.000 mPas/25°C.

|  | ohne | mit |
|---|---|---|
|  | Schlußstrich | |
| **Wassersäule** | | |
| a) Original | 1.100 mm | 2.000 mm |
| b) 3 x 30°C Wäsche | 700 mm | 1.500 mm |
| c) 1 x Chemischreinigung | 700 mm | 1.000 mm |
| WDD (nach IUP 15) | 5,8 mg/m² h | 4,9 mg/m² h |

## Beispiel 3

### I. Herstellung der PUR-Dispersion P 2

1.680 g (0,84 Mol) eines Poly-propylenglykolethers, (OHZ 56), 21,5 g (0,16 Mol) Dimethylolpropionsäure, 16,0 g (0,16 Mol) Triethylamin werden mit 303 g (1,80 Mol) Hexandiisocyanat-1,6 zu einem NCO-Propolymeren umgesetzt; dieses wird in wäßriger Phase mit 30,0 g (0,50 Mol) Ethylendiamin und 47,5 g (0,25 Mol) Ethylendiaminsulfonsäure (als Natriumsalz) als Kettenverlängerer zum Polyurethanharnstoff aufgebaut; die PUR-Dispersion P 2 hat einen Feststoffgehalt von 40 %.

## II. Herstellung der Grundstrichpaste

1.000 g der PUR-Dispersion P 2 nach 3/I werden mit 30 g einer 10 %igen Lösung von polyacrylsaurem Na (Latekoll® AS, BASF) und 3 g Triethanolamin versetzt. Nach Zugabe von 1 g Entschäumer (Antispumin® DJ, Firma Stockhausen) dispergiert man 400 g Waschbenzin und 200 g Toluol in der viskosen, verdickten PUR-Dispersion, ca. 25 %, Viskosität, ca. 15.00 mPas/25°C.

In 1.000 g dieser PUR-Benzin/Toluol-Dispersion (PUR-B/3) wurden 15 g eines Polyaziridins (gemäß DE-P 3 415 920.7, Beispiel 3/IV) eingerührt, Feststoffgehalt der Streichpaste ca. 26 %, Viskosität ca. 12.000 mPas/25°C.

## III. Herstellung der Deckstrichpaste

1.000 g der PUR-Dispersion P 2 nach 3/I werden mit 20 g einer 5 %igen wäßrigen Lösung von Carboxymethylcellulose (Walocel MT 4.000 GB, Firma Wolff, Walsrode) verdickt, pH 9. Nach Zugabe von 3 g Triethanolamin, 1 g Entschäumer (Antispumin® DJ, Firma Stockhausen) werden 400 g Waschbenzin und 200 g Essigsäureethylester in der viskosen PUR-Dispersion dispergiert, Feststoff ca. 25 %, Viskosität ca. 10.000 mPas/25°C.

In 1.000 g dieser PUR-Benzin/Essigsäureethylester-Dispersion (PUR B/4) werden 15 g einer 50 %igen wäßrigen Lösung eines Melaminharzes (Cassurit® HML, Firma Cassella) und 15 g eines selbstvernetzenden Silicon-Gemisches, wie in 2/II, eingerührt. Feststoffgehalt ca. 26 %, Viskosität ca. 8.000 mPas.

## IV. Wasserdampfdurchlässige Beschichtung

Analog zu 1/IV wird ein Polyestergewebe von ca. 110 g/m² Warengewicht mit 3/III grundiert (Luftrakel) und mit 3/III beschichtet (Walzenrakel). Bei einer Feststoffauflage von ca. 30 g/² zeigt der Artikel Fülle, weichen Griff, hohe Wasserdichte und hohe Wasserdampfdurchlässigkeit.

## Beispiel 4

### I. Herstellung der Deckstrichpaste

500 g der in Beispiel 1 beschriebenen PUR-Dispersion P 1 und 500 g der in DE-OS 3 134 161, Beispiel 2 beschriebenen PUR-Dispersion werden mit 40 g einer 25 %igen Polyacrylsäurelösung versetzt; nach Zugabe von 15 g conc. Ammoniak/Wasser - 1:1 hat die nunmehr verdickte Dispersion einen pH-Wert von 9. Die verdickte PUR-Dispersion wird mit 100 g einer Titandioxid-Weißpaste (EUKANOL® Weiß LD, BAYER) pigmentiert und zur leichtern Herstellung eines blasenfreien Deckstrichtes mit 1 g Entschäumer (Antispumin® DJ, Stockhausen) versetzt.

### II. Herstellung der Zwischenstrichpaste

Wie Beispiel 1/III (Deckstrichpaste)

### III. Herstellung der Haftstrichpaste

Wie in Beispiel 1/II (Grundstrichpaste)

### IV. Wasserdampfdurchlässige Beschichtung von Spaltleder

Auf einem naßfesten Trennpapier wird mittels der Deckstrichpaste 4/I übr eine Naßauflage von 25 g/m² nach Trocknung bei 80 bis 130°C ein Deckstrich von 10 g/m² Trockenauflage erhalten.

Auf dem Deckstrich wird mittels der Zwischenstrichpaste 4/II eine mikroporöse Schicht erzeugt:

Rakelspalt 0,12 mm, Trockentemperatur 70/70/100°C, gedrosselte Luftführung, Feststoffauflage 20 g/m².

Auf die bifilare Schicht wird schließlich der Haftstrich 4/III gerakelt; Rakelspalt 0,1 mm; in die naße Schicht wird das Spaltleder eingelegt, leicht angedrückt und bei 70/70/100°C im Trockenkanal in die mikroporöse Schicht überführt.

Zur Vernetzung von Zwischen- und Haftstrich wird der Artikel kurzzeitig, ca. 1 bis 15 min. auf 140 bis 150°C erhitzt.

Das Spaltleder ist mit einer wasserdampfdurchlässigen Schicht von ca. 50 g/m² beschichtet bzw. zugerichtet. Der Artikel ist von trockenem, angenehm weichem, fülligem Griff und zeichnet sich durch hohe Wasserdampfdurchlässigkeit aus.

## Ansprüche

1. Streichpasten auf Basis von wäßrigen PU-Dispersionen, polymeren Verdickern und selbstvernetzbaren Polysiloxansystemen, dadurch gekennzeichnet, daß die Streichpasten lösungsmittelhaltige, mehrphasige, stabile Gemische sind aus

a) 20 bis 90 Gew.-% an wäßrigen 20 bis 60 gew.-%igen Polyurethan-Dispersionen aus Polyurethanen, enthaltend end- und/oder seitenständige Carboxylat- und/oder Sulfonat-Gruppen und/oder Oxyethylen-Einheiten enthaltende Polyetherketten,

b) 0,1 bis 5 Gew.-% wasserlöslichen, vernetzbaren, polymeren Nicht-Polyurethanen mit Carboxyl-Gruppen oder ihren Salzen, als Verdicker für PU-Dispersionen,

c) 3 bis 60 Gew.-%, an mit Wasser nicht mischbaren organischen Lösemitteln mit Siedepunkten unter 170°C, als Nichtlöser für Polyurethane in wäßrigen Dispersionen,

d) 0,1 bis 5 Gew.-%, an Vernetzern für die Polyurethane a) und/oder Nicht-Polyurethane b) mit reaktiven, vernetzbaren Gruppen in wäßrigen Dispersionen,

e) 0,1 bis 5 Gew.-%, an selbstvernetzenden Polysiloxangemischen, welche Vinylgruppen tragende höhermolekulare Dimethylpolysiloxane, gegebenenfalls zusätzlich niedermolekulare cyclische Vinylmethylsiloxane, SiH-Gruppen tragende Polydimethylsiloxane und einen Pt-Komplex als Katalysator enthalten,

f) 0 bis 5 Gew.-%, an Hydrophobierungsmitteln, Stabilisatoren, und/oder weiteren Beschichtungshilfsmitteln (die Summe der Prozentanteile a) bis f) soll sich dabei jeweils zu 100 addieren).

2. Streichpasten nach Anspruch 1, dadurch gekennzeichnet, daß die Beschichtungsmassen aus a) bis f) in folgenden Mengen zusammengesetzt sind:
40 bis 70 Gew.-% Polyurethan-Dispersionen a), 1 bis 3 Gew.-% an wasserlöslichen polymeren Nicht-Polyurethanen b), 3 bis 60 Gew.-%, bevorzugt 20 bis 50 Gew.-%, Nichtlöser c), 1 bis 3 Gew.-% an Vernetzern d), 1-3 Gew.-% selbstvernetzende Polysiloxan-Gemische e) und 0,1 bis 5 Gew.-%, bevorzugt 1 bis 3 Gew.-%, Hydrophobierungsmittel, Stabilisatoren und weitere Beschichtungshilfsmittel nach f).

3. Streichpasten nach Ansprüchen 1 und 2, dadurch gekennzeichnet, daß die Polyurethane der wäßrigen Dispersionen a) bestehen aus
1,0 Mol Polyhydroxyverbindung vom Molgewicht 600 bis 5.000,
1,2 bis 5,0 Mol aliphatischen und/oder cycloaliphatischen und/oder aromatischen Polyisocyanaten,
0,1 bis 4,0 Mol Polyalkoholen und/oder Polyaminen vom Molgewicht 62 bis 500 als Kettenverlängerer, wobei 0,01 bis 4,0 Mol dieser Kettenverlängerer mindestens eine Carboxylat- und/oder Sulfonatgruppe und/oder eine Oxyethylen-Einheiten enthaltende Polyetherkette tragen.

4. Streichpasten nach Ansprüchen 1 bis 3, dadurch gekennzeichnet, daß die wasserlöslichen, polymeren Nicht-Polyurethane b) Alkali- und/oder Ammoniumsalze und/oder Aminsalze von Polyacryl-/Methacrylsäuren und/oder Cellulosecarbonsäuren sind.

5. Streichpasten nach Ansprüchen 1 bis 4, dadurch gekennzeichnet, daß die mit Wasser nicht mischbaren organischen Lösemittel c) mit Siedepunkten unter 170°C, Nichtlöser für Polyurethane in wäßrigen Dispersionen, aromatische und/oder aliphatische Kohlenwasserstoffe und/oder niedere Fettsäureester und/oder aliphatische Ketone, vorzugsweise aromatische und/oder aliphatische Kohlenwasserstoffe, insbesondere Benzinfraktionen, sind.

6. Streichpasten nach Ansprüchen 1 bis 5, dadurch gekennzeichnet, daß die Vernetzer d) für Polyurethane a) und die polymeren Nicht-Polyurethane b) mit reaktiven Gruppen Polyisocyanatabspalter und/oder Melaminharze und/oder Polyepoxide und/oder Polyaziridine und/oder Polycarbodiimide sind.

7. Streichpasten nach Ansprüchen 1 bis 6, dadurch gekennzeichnet, daß die Vernetzer d) für Polyurethane a) und die polymeren Nichtpolyurethane b) mit reaktiven Gruppen Melaminharze und/oder Polyepoxide sind.

8. Streichpasten nach Ansprüchen 1 bis 7, dadurch gekennzeichnet, daß die Vernetzer f) für Polyurethane und die polymeren Nichtpolyurethane mit reaktiven Endgruppen Polycarbodiimide sind.

9. Verwendung der Streichpasten nach Ansprüchen 1 bis 8, zur Herstellung von wasserdampfdurchlässigen Beschichtungen auf Textil- oder Ledersubstraten im Direkt- oder Transferverfahren nach dem Prinzip der Verdampfungskoagulation.

## Claims

1. Spread coating pastes based on aqueous PU dispersions, polymeric thickeners and self-crosslinkable polysiloxane systems, characterised in that the spread coating pastes are solvent-containing, multiphase, stable mixtures of

   a) 20 to 90 % by weight of aqueous 20 to 60 % strength by weight polyurethane dispersions of polyurethanes containing terminal and/or lateral carboxylate groups and/or sulphonate groups and/or polyether chains containing oxyethylene units,

   b) 0.1 to 5 % by weight of water-soluble, crosslinkable, polymeric non-polyurethanes having carboxyl groups or salts thereof, as thickeners for PU dispersions,

   c) 3 to 60 % by weight of water-immiscible organic solvents having boiling points below 170 °C as nonsolvents for polyurethanes in aqueous dispersions,

   d) 0.1 to 5 % by weight of crosslinking agents for the polyurethanes a) and/or non-polyurethanes b) having reactive, crosslinkable groups in aqueous dispersions,

   e) 0.1 to 5 % by weight of self-crosslinking polysiloxane mixtures which contain higher-molecular dimethylpolysiloxanes carrying vinyl groups, optionally in addition low-molecular cyclic vinylmethylsiloxanes, polydimethylsiloxanes carrying SiH groups and a Pt complex as a catalyst,

   f) 0 to 5 % by weight of water-repellency agents, stabilizers and/or further coating auxiliaries (the sum of the percentage fractions a) to f) should here always add up to 100).

2. Spread coating pastes according to Claim 1, characterised in that the coating compositions consisting of a) to f) are composed of the following quantities:
   40 to 70 % by weight of polyurethane dispersions a), 1 to 3 % by weight of water-soluble polymeric non-polyurethanes b), 3 to 60 % by weight, preferably 20 to 50 % by weight, of non-solvents c), 1 to 3 % by weight of crosslinking agents d), 1-3 % by weight of self-crosslinking polysiloxane mixtures e) and 0.1 to 5 % by weight, preferably 1 to 3 % by weight, of water repellency agents, stabilizers and further coating auxiliaries according to f).

3. Spread coating pastes according to Claims 1 and 2, characterised in that the polyurethanes of the aqueous dispersions a) consist of
   1.0 mol of polyhydroxy compound of molecular weight 600 to 5,000,
   1.2 to 5.0 mol of aliphatic and/or cycloaliphatic and/or aromatic polyisocyanates,
   0.1 to 4.0 mol of polyalcohols and/or polyamines of molecular weight 62 to 500 as chain extenders,
   0.01 to 4.0 mol of these chain extenders carrying at least one carboxylate group and/or sulphonate group and/or a polyether chain containing oxyethylene units.

4. Spread coating pastes according to Claims 1 to 3, characterised in that the water-soluble, polymeric nonpolyurethanes b) are alkali metal salts and/or ammonium salts and/or amine salts of polyacrylic/methacrylic acids and/or cellulosecarboxylic acids.

5. Spread coating pastes according to Claims 1 to 4, characterised in that the water-immiscible organic solvents c) having boiling points below 170 °C which are non-solvents for polyurethanes in aqueous dispersions are aromatic and/or aliphatic hydrocarbons and/or lower fatty acid esters and/or aliphatic ketones, preferably aromatic and/or aliphatic hydrocarbons, especially light petroleum fractions.

6. Spread coating pastes according to Claims 1 to 5, characterised in that the crosslinking agents d) for polyurethanes a) and the polymeric non-polyurethanes b) having reactive groups are polyisocyanate donors and/or melamine resins and/or polyepoxides and/or polyaziridines and/or polycarbodiimides.

7. Spread coating pastes according to Claims 1 to 6, characterised in that the crosslinking agents d) for polyurethanes a) and the polymeric non-polyurethanes b) having reactive groups are melamine resins and/or polyepoxides.

8. Spread coating pastes according to Claims 1 to 6, characterised in that the crosslinking agents d) for polyurethanes and the polymeric non-polyurethanes having reactive end groups are polycarbodiimides.

9. Use of the spread coating pastes according to Claims 1 to 8 for the preparation of water vapour-permeable coatings on textile substrates or leather substrates by the direct process or transfer process according to the principle of evaporative coagulation.

**Revendications**

1. Pâtes d'enduction à base de dispersions aqueuses de PU, d'épaississants polymères et de systèmes autoréticulants de polysiloxanes, caractérisées en ce que les pâtes d'enduction sont des mélanges à plusieurs phases, contenant des solvants, de

a) 20 à 90% en poids de dispersions aqueuses à 20 à 60% en poids, de polyuréthannes, contenant des chaînes polyéther qui contiennent des groupes carboxylate et/ou sulfonate en bout de chaîne et/ou en position latérale et/ou des unités oxyéthylène,

b) 0,1 à 5% en poids de non-polyuréthannes polymères réticulables solubles dans l'eau, comportant des groupes carboxyle, ou leurs sels, comme épaississants pour les dispersions de PU,

c) 3% a 60% en poids, de solvants organiques non miscibles avec l'eau et ayant des points d'ébullition inférieurs à 170° C, comme non-solvants pour les polyuréthannes en dispersion aqueuse,

d) 0,1 à 5% en poids de réticulants pour les polyuréthannes a) et/ou les non-polyuréthannes b) avec des groupes réactifs réticulables dans les dispersions aqueuses,

e) 0,1 à 5% en poids de mélanges de polysiloxanes autoréticulants contenant des diméthylpolysiloxanes de poids moléculaire élevé portant des groupes vinyle, éventuellement, en plus, des vinylméthylsiloxanes cycliques de poids moléculaire plus bas, des polydiméthylsiloxanes portant des groupes SiH, et un complexe de Pt comme catalyseur,

f) 0 à 5% en poids d'agents d'hydrofugation, de stabilisateurs et/ou d'autres adjuvants pour revêtements (la somme des pourcentages a) à f) devant toujours être égale à 100).

2. Pâtes d'enduction selon la revendication 1, caractérisées en ce que les masses de revêtement à base des produits a) à f) sont composées des quantités suivantes:

40 à 70% en poids de dispersions de polyuréthannes a), 1 a 3% en poids de non-polyuréthannes polymères solubles dans l'eau b), 3 à 60% en poids, de préférence 20 à 50% en poids de non-solvants c), 1 à 3% en poids de réticulants d), 1 à 3% en poids de mélanges de polysiloxanes autoréticulants e) et 0,1 à 5% en poids, de Préférence 1 à 3% en poids d'agent d'hydrofugation, de stabilisateurs et d'autres additifs pour revêtements selon f).

3. Pâtes d'enduction selon les revendications 1 et 2, caractérisées en ce que les polyuréthannes des dispersions aqueuses a) se composent de

1,0 mole de composé polyhydroxy d'un poids molaire de 600 à 5.000,

1,2 a 5,0 moles de polyisocyanates aliphatiques et/ou cycloaliphatiques et/ou aromatiques,

0,1 à 4,0 moles de polyalcools et/ou de polyamines d'un poids molaire de 62 à 500 comme agents d'allongement de chaîne, dont 0,01 à 4,0 moles de ces agents d'allongement de chaîne portent au moins un groupe carboxylate et/ou un groupe sulfonate et/ou une chaîne polyéther contenant des unités oxyéthylène.

4. Pâtes d'enduction selon les revendications 1 à 3, caractérisées en ce que les nonpolyuréthannes

EP 0 238 991 B1

polymères solubles dans l'eau b) sont des sels de métaux alcalins et/ou d'ammonium et/ou des sels aminés d'acides polyacryliques/polyméthacryliques et/ou d'acides cellulosecarboxyliques.

5. Pâtes d'enduction selon les revendications 1 à 4, caractérisées en ce que les solvants organiques c) non miscibles avec l'eau, de points d'ébullition inférieurs à 170° C, sont des nonsolvants pour les polyuréthannes en dispersions aqueuses, des hydrocarbures aromatiques et/ou aliphatiques et/ou des esters d'acides gras inférieurs et/ou des cétones aliphatiques, de préférence des hydrocarbures aromatiques et/ou aliphatiques, en particulier des fractions d'essence.

6. Pâtes d'enduction selon les revendications 1 à 5, caractérisées en ce que les réticulants d) pour polyuréthannes a) et les nonpolyuréthannes polymères b) avec des groupes réactifs sont des séparateurs de polyisocyanates et/ou des résines de mélamine et/ou des composés polyépoxy et/ou des polyaziridines et/ou des polycarbodiimides.

7. Pâtes d'enduction selon les revendications 1 à 6, caractérisées en ce que les réticulants d) pour polyuréthannes et les nonpolyuréthannes polymères avec des groupes réactifs sont des résines de mélamine et/ou des composés polyépoxy.

8. Pâtes d'enduction selon les revendications 1 à 6, caractérisées en ce que les réticulants d) pour polyuréthannes et les nonpolyuréthannes polymères avec des groupes réactifs en bout de chaîne sont des polycarbodiimides.

9. Utilisation des pâtes d'enduction selon les revendications 1 à 8, pour la fabrication de revêtements perméables à la vapeur d'eau sur des substrats textiles ou du cuir dans des procédés directs ou de transfert selon le principe de la coagulation par évaporation.

12